# EUROPEAN PATENT APPLICATION

(11) **EP 4 207 020 A1**
(43) Date of publication of application: **05.07.2023**
(21) Application number: 21893606.0
(22) Date of filing: 29.09.2021
(51) Int. Cl.: G06Q 10/08

(54) **ARTICLE TRANSPORT METHOD, CONTROL DEVICE, TRANSPORT VEHICLE AND COMPUTER STORAGE MEDIUM**

(30) Priority: 23.11.2020 CN 202011323194
(71) Applicant: Beijing Jingdong Qianshi Technology Co., Ltd., Beijing 100176 (CN)
(72) Inventor: LIAN, Gendi, Beijing 100176 (CN)
(74) Representative: Regimbeau
(86) International application number: PCT/CN2021/121853
(87) International publication number: WO 2022/105456

(57) **Abstract**

An article transport method, a control device, a transport vehicle and a storage medium. The method comprises: upon the reception of loading completion information of a first transport vehicle, acquiring, in real time, the current position of a first client, wherein the loading completion information is used for representing that a first article required by the first client has been loaded on the first transport vehicle (S101); if the current position of the first client is not being acquired for the first time, acquiring the previous target transport range corresponding to the previous target transport position (S 102); if the current position of the first client is not within the previous target transport range, taking the current position of the first client as the current target transport position (S103); and sending a transport instruction to the first transport vehicle on the basis of the current target transport position, wherein the transport instruction is used for instructing the first transport vehicle to move from the current position of the first transport vehicle to the current target transport position (S104).

## Description

### CROSS-REFERENCE TO RELATED APPLICATION

The disclosure claims priority to Chinese patent application No. 202011323194.0 filed on November 23, 2020, the content of which is hereby incorporated by reference in its entirety.

### TECHNICAL FIELD

The disclosure relates to the field of computer technologies, and in particular, to a method for article transportation, a control device, a transportation vehicle, and a computer storage medium.

### BACKGROUND

At present, after a user orders an article through a client, a control device can obtain order information of the ordered article and control, based on the order information, an unmanned vehicle to load the article ordered by the user and transport the loaded article to a location of the user such that the user can pick up the article. However, in an application scenario such as a shopping mall, the location of the user may change after the user orders the article. Consequently, after the unmanned vehicle transports the article to the original location of the user, the user cannot pick up the article in time, resulting in impact on article transportation efficiency.

### SUMMARY

Embodiments of the disclosure provide a method for article transportation, a control device, a transportation vehicle, and a computer storage medium to improve article transportation efficiency.

The technical solutions in the embodiments of the disclosure are implemented as follows.

An embodiment of the disclosure provides a method for article transportation, including:
when receiving loading completion information from a first transportation vehicle, obtaining a current location of a first client in real time, herein the loading completion information indicates that the first transportation vehicle finishes loading a first article required by the first client; in response to the current location of the first client being not obtained for a first time, obtaining a previous target transportation range corresponding to a previous target transportation location; in response to the current location of the first client being out of the previous target transportation range, taking the current location of the first client as a current target transportation location; and sending a transportation instruction to the first transportation vehicle based on the current target transportation location, herein the transportation instruction is used to instruct the first transportation vehicle to move from a current location of the first transportation vehicle to the current target transportation location.

An embodiment of the disclosure provides a method for article transportation, including:
when finishing loading a first article required by a first client, sending loading completion information to a control device, herein the loading completion information is used to instruct the control device to obtain a current location of the first client in real time and determine a current target transportation location of a first transportation vehicle based on the current location of the first client; receiving a transportation instruction from the control device, herein the transportation instruction is generated by the control device based on the current target transportation location; and moving to the current target transportation location based on the transportation instruction.

An embodiment of the disclosure provides a control device, including:
a first receiving portion, configured to: when receiving loading completion information from a first transportation vehicle, obtain a current location of a first client in real time, herein the loading completion information indicates that the first transportation vehicle finishes loading a first article required by the first client;
an obtaining portion, configured to: in response to the current location of the first client being not obtained for a first time, obtain a previous target transportation range corresponding to a previous target transportation location;
an adoption portion, configured to: in response to the current location of the first client being out of the previous target transportation range, take the current location of the first client as a current target transportation location; and
a first sending portion, configured to send a transportation instruction to the first transportation vehicle based on the current target transportation location, herein the transportation instruction is used to instruct the first transportation vehicle to move from a current location of the first transportation vehicle to the current target transportation location.

An embodiment of the disclosure provides a first transportation vehicle, including:
a second sending portion, configured to: when finishing loading a first article required by a first client, send loading completion information to a control device, herein the loading completion information is used to instruct the control device to obtain a current location of the first client in real time and determine a current target transportation location of the first transportation vehicle based on the current location of the first client;
a second receiving portion, configured to receive a transportation instruction from the control device, herein the transportation instruction is generated by the control device based on the current target transportation location; and
a movement portion, configured to move to the current target transportation location based on the transportation instruction.

An embodiment of the disclosure provides a control device, including:
a first memory, configured to store executable instructions; and
a first processor, configured to execute the executable instructions stored in the first memory, to implement the method on the control device side provided in the embodiments of the disclosure.

An embodiment of the disclosure provides a first transportation vehicle, including:
a second memory, configured to store executable instructions; and
a second processor, configured to execute the executable instructions stored in the second memory, to implement the method on the first transportation vehicle side provided in the embodiments of the disclosure.

An embodiment of the disclosure provides a storage medium storing executable instructions, which, when executed by a first processor, implement the method on the control device side provided in the embodiments of the disclosure; or when executed by a second processor, implement the method on the first transportation vehicle side provided in the embodiments of the disclosure.

The embodiments of the disclosure have the following beneficial effects.

The embodiments of the disclosure provide a method for article transportation, a control device, a transportation vehicle, and a computer storage medium. When receiving loading completion information from a first transportation vehicle, the control device obtains a current location of a first client in real time. The loading completion information indicates that the first transportation vehicle finishes loading a first article required by the first client. In response to the current location of the first client being not obtained for a first time, a previous target transportation range corresponding to a previous target transportation location is obtained. In response to the current location of the first client being out of the previous target transportation range, the current location of the first client is taken as a current target transportation location. A transportation instruction is sent to the first transportation vehicle based on the current target transportation location. The transportation instruction is used to instruct the first transportation vehicle to move from a current location of the first transportation vehicle to the current target transportation location. In other words, the control device can determine the current target transportation location based on the real-time location of the first client, to control the first transportation vehicle to transport the first article to the location of the first client in time. This improves the article transportation efficiency.

### BRIEF DESCRIPTION OF THE DRAWINGS

FIG. 1 is an optional schematic structural diagram of architecture of an article transportation system according to an embodiment of the disclosure;
FIG. 2 is an optional schematic structural diagram of a control device according to an embodiment of the disclosure;
FIG. 3 is an optional schematic structural diagram of a transportation vehicle according to an embodiment of the disclosure;
FIG. 4 is an optional schematic flowchart of a method for article transportation according to an embodiment of the disclosure;
FIG. 5 is an optional schematic flowchart of a method for article transportation according to an embodiment of the disclosure;
FIG. 6 is an optional schematic flowchart of a method for article transportation according to an embodiment of the disclosure;
FIG. 7 is an optional schematic flowchart of a method for article transportation according to an embodiment of the disclosure; and
FIG. 8 is a schematic diagram of an interaction process among a first client, a first transportation vehicle, and a control device according to an embodiment of the disclosure.

### DETAILED DESCRIPTION

To make the objective, technical solutions, and advantages of the disclosure more clear, the disclosure is further described below in detail with reference to the drawings. The described embodiments should not be construed as a limitation to the disclosure. All other embodiments obtained by a person of ordinary skill in the art without creative efforts shall fall within the protection scope of the disclosure.

In the following description, "some embodiments" means a subset of all possible embodiments. However, it can be understood that "some embodiments" may be a same subset or different subsets of all possible embodiments and may be combined with each other provided that no conflict exists.

In the following description, the terms "first", "second", and "third" are merely intended to distinguish between similar objects but do not indicate a specific order of the objects. It can be understood that if allowed, "first", "second", and "third" may be interchanged in a specific order or sequence to enable the described embodiments of the disclosure to be practiced in the sequence other than that illustrated or described herein.

Unless otherwise defined, all technical and scientific terms used in the embodiments of the disclosure have the same meaning as commonly understood by those skilled in the technical field of the disclosure. The terms used in the embodiments of the disclosure are merely intended to describe the embodiments of the disclosure and are not intended to limit the disclosure.

At present, a user may order an article through a client. After receiving the order for the article from the client, an article transportation apparatus may control an unmanned vehicle to load the article ordered through the client on the order and move to a location of the user such that the user can obtain the ordered article. However, in an application scenario such as a shopping mall, the location of the user may change after the user orders the article. Consequently, after the unmanned vehicle transports the article to the original location of the user, the user cannot pick up the article in time, resulting in impact on article transportation efficiency.

The embodiments of the disclosure provide a method for article transportation, a control device, a transportation vehicle, and a computer storage medium to improve article transportation efficiency. The following describes exemplary applications of a device for article transportation provided in the embodiments of the disclosure. The device provided in the embodiments of the disclosure may be implemented as various user terminals such as a notebook computer, a tablet computer, a desktop computer, a set-top box, or a mobile device (for example, a mobile phone, a portable music player, a personal digital assistant, a dedicated messaging device, or a portable gaming device), or may be implemented as a server. The following describes exemplary application when the device is implemented as a terminal.

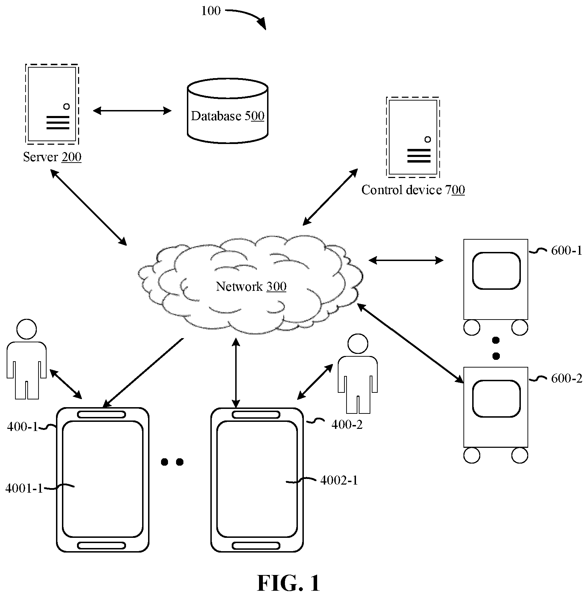

FIG. 1 is an optional schematic diagram of architecture of an article transportation system 100 according to an embodiment of the disclosure. As shown in FIG. 1, the article transportation system includes a control device 700, at least one client 400 (FIG. 1 shows a client 400-1 and a client 400-2), and at least one transportation vehicle 600 (FIG. 1 shows a transportation vehicle 600-1 and a transportation vehicle 600-2). To support an article transportation application, the at least one client 400 is connected to a server 200 and the control device 700 through a network 300. The control device 700 communicates with the at least one transportation vehicle 600 through the network 300. The network 300 may be a Wide Area Network (WAN), a Local Area Network (LAN), or a combination thereof.

The at least one client 400 is configured to send an article transportation request to the control device 700 through the article transportation application. When receiving loading completion information from the first transportation vehicle 600-1, the control device 700 starts to obtain a current location of the first client 400-1 in real time. In response to the current location of the first client 400-1 being not obtained for a first time, a previous target transportation range is obtained. The previous target transportation range is determined based on a previous target transportation location. In response to the current location of the first client 400-1 being out of the previous target transportation range, the current location of the first client 400-1 is taken as a current target transportation location. A transportation instruction is sent to the first transportation vehicle 600-1 based on the current target transportation location. The first transportation vehicle 600-1 is configured to: when finishing loading a first article required by the first client 600-1, send the loading completion information to the control device 700, where the loading completion information is used to instruct the control device 700 to obtain the current location of the first client 400-1 in real time and determine the current target transportation location of the first transportation vehicle 400-1 based on the current location of the first client 400-1; receive the transportation instruction from the control device 700; and move to the current target transportation location based on the transportation instruction. The server 200 is configured to provide data support for the control device 700 through article information stored in a database 500.

For example, a user of the first client 400-1 may operate on a display interface 4001-1 of the first client 400-1 to place an order for the first article through the article transportation application. The order is equivalent to the article transportation request. After determining, based on the order, the first article ordered by the first client 400-1, the control device 700 obtains a storage location of the first article from the server 200, sends the storage location of the first article to the first client 400-1, and instructs the first client 400-1 to go to the storage location of the first article to load the first article. The first transportation vehicle 600-1 may send the loading completion information to the control device when finishing loading the first article. After determining that the first transportation vehicle 600-1 finishes loading the first article, the control device controls the first transportation vehicle to go to a location of the user of the first client 400-1 such that the user of the first client 400-1 can obtain the ordered first article from the first transportation vehicle 600-1.

In some embodiments, the server 200 may be an independent physical server, a server cluster or a distributed system composed of a plurality of physical servers, or a cloud server providing basic cloud computing services, such as a cloud service, a cloud database, cloud computing, a cloud function, cloud storage, a network service, cloud communication, a middleware service, a domain name service, a security service, a Content Delivery Network (CDN), and big data and artificial intelligence platforms. The terminal 400 may be a smartphone, a tablet computer, a notebook computer, a desktop computer, a smart sound box, a smart watch, or the like, but is not limited thereto. The terminal and the server may be directly or indirectly connected through wired or wireless communication. This is not limited in the embodiments of the disclosure.

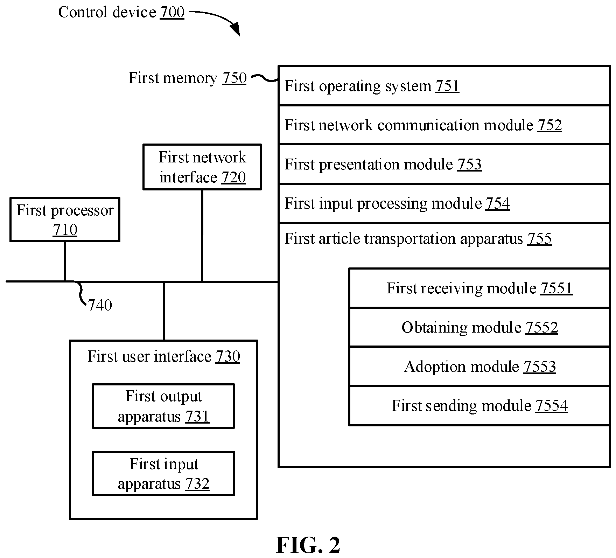

FIG. 2 is a schematic structural diagram of a control device 700 according to an embodiment of the disclosure. The article transportation control device 700 shown in FIG. 2 includes at least one first processor 710, a first memory 750, at least one first network interface 720, and a first user interface 730. Components of the control device 700 are coupled through a first bus system 740. It can be understood that the first bus system 740 is configured to implement connection and communication between the components. The first bus system 740 includes a power bus, a control bus, and a status signal bus in addition to a data bus. However, for clarity, various buses are denoted as the first bus system 740 in FIG. 2.

The first processor 710 may be an integrated circuit chip having a signal processing capability, such as a general-purpose processor, a Digital Signal Processor (DSP), another programmable logic device, a discrete gate or transistor logic device, or a discrete hardware component. The general-purpose processor may be a microprocessor, any conventional processor, or the like.

The first user interface 730 includes one or more output apparatuses 731, including one or more speakers and/or one or more visual display screens, that enable presentation of media content. The first user interface 730 further includes one or more first input apparatuses 732, including user interface components that facilitate user input, such as a keyboard, a mouse, a microphone, a touch display screen, a camera, other input buttons, and controls.

The first memory 750 may be removable, non-removable, or a combination thereof. For example, a hardware device includes a solid-state memory, a hard disk drive, or an optical disc drive. Optionally, the first memory 750 includes one or more storage devices that are physically away from the first processor 710.

The first memory 750 includes a volatile memory, a non-volatile memory, or both a volatile memory and a non-volatile memory. The non-volatile memory may be a Read-Only Memory (ROM). The volatile memory may be a Random Access Memory (RAM). The first memory 750 described in the embodiments of the disclosure is intended to include any suitable type of memory.

In some embodiments, the first memory 750 is capable of storing data to support various operations. Examples of the data include programs, modules, and data structures, or a subset or superset thereof, as illustratively described below.

An operating system 751 includes system programs used to process various basic system services and perform hardware-related tasks, such as a framework layer, a core library layer, and a driver layer, and is configured to implement various basic services and process hardware-based tasks.

A first network communication module 752 is configured to reach another computing device through the one or more (wired or wireless) first network interfaces 720. For example, the first network interface 720 includes Bluetooth, Wireless Fidelity (Wi-Fi), Universal Serial Bus (USB), or the like.

A first presentation module 753 is configured to enable presentation of information through the one or more first output apparatuses 731 (for example, a display screen and a speaker) associated with the first user interface 730 (for example, a user interface configured to operate a peripheral device and display content and information).

A first input processing module 754 is configured to detect one or more user inputs or interactions from one of the one or more first input apparatuses 732 and translate the detected inputs or interactions.

In some embodiments, a first article transportation apparatus in the control device provided in the embodiments of the disclosure may be implemented by software. FIG. 2 shows a first article transportation apparatus 755 stored in the memory 750, which may be software in a form of a program, plug-in, or the like and include the following software modules: a first receiving module 7551, an obtaining module 7552, an adoption module 7553, and a first sending module 7554. These modules are logical, and may be arbitrarily combined or further divided based on implemented functions.

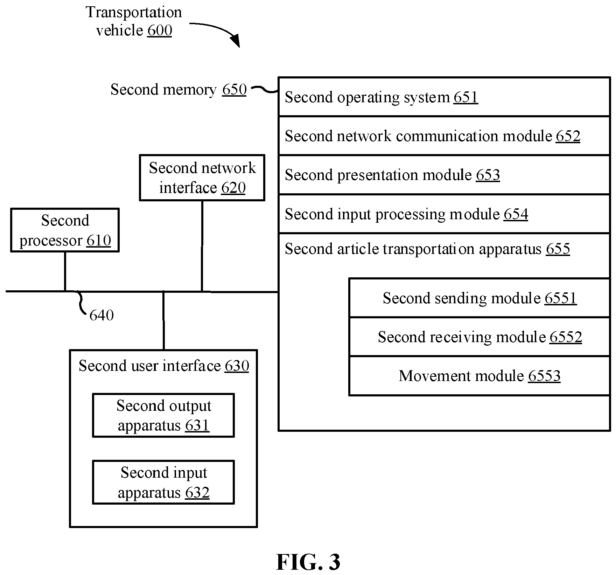

FIG. 3 is a schematic structural diagram of a transportation vehicle 600 configured to transport an article according to an embodiment of the disclosure. The transportation vehicle 600 shown in FIG. 3 includes at least one second processor 610, a second memory 650, at least one second network interface 620, and a second user interface 630. Components of the client 600 are coupled through a second bus system 640. It can be understood that the second bus system 640 is configured to implement connection and communication between the components. The second bus system 640 includes a power bus, a control bus, and a status signal bus in addition to a data bus. However, for clarity, various buses are denoted as the second bus system 640 in FIG. 2.

The second processor 610 may be an integrated circuit chip having a signal processing capability, such as a general-purpose processor, a DSP, another programmable logic device, a discrete gate or transistor logic device, or a discrete hardware component. The general-purpose processor may be a microprocessor, any conventional processor, or the like.

The second user interface 630 includes one or more output apparatuses 631, including one or more speakers and/or one or more visual display screens, that enable presentation of media content. The second user interface 630 further includes one or more second input apparatuses 632, including user interface components that facilitate user input, such as a keyboard, a mouse, a microphone, a touch display screen, a camera, other input buttons, and controls.

The second memory 650 may be removable, non-removable, or a combination thereof. For example, a hardware device includes a solid-state memory, a hard disk drive, or an optical disc drive. Optionally, the second memory 650 includes one or more storage devices that are physically away from the second processor 610.

The second memory 650 includes a volatile memory, a non-volatile memory, or both a volatile memory and a non-volatile memory. The non-volatile memory may be a ROM. The volatile memory may be a RAM. The second memory 650 described in the embodiments of the disclosure is intended to include any suitable type of memory.

In some embodiments, the second memory 650 is capable of storing data to support various operations. Examples of the data include programs, modules, and data structures, or a subset or superset thereof, as illustratively described below.

A second operating system 651 includes system programs used to process various basic system services and perform hardware-related tasks, such as a framework layer, a core library layer, and a driver layer, and is configured to implement various basic services and process hardware-based tasks.

A second network communication module 652 is configured to reach another computing device through the one or more (wired or wireless) second network interfaces 620. For example, the second network interface 620 includes Bluetooth, Wi-Fi, USB, or the like.

A second presentation module 653 is configured to enable presentation of information through the one or more second output apparatuses 631 (for example, a display screen and a speaker) associated with the second user interface 630 (for example, a user interface configured to operate a peripheral device and display content and information).

A second input processing module 654 is configured to detect one or more user inputs or interactions from one of the one or more second input apparatuses 632 and translate the detected inputs or interactions.

In some embodiments, a second article transportation apparatus in the first transportation vehicle provided in the embodiments of the disclosure may be implemented by software. FIG. 3 shows a second article transportation apparatus 655 stored in the second memory 650, which may be software in a form of a program, plug-in, or the like and include the following software modules: a second sending module 6551, a second receiving module 6552, and a movement module 6553. These modules are logical, and may be arbitrarily combined or further divided based on implemented functions.

Functions of the modules will be described below.

In some other embodiments, the apparatus provided in the embodiments of the disclosure may be implemented by hardware. For example, the apparatus provided in the embodiments of the disclosure may be a hardware decoding processor, which is programmed to perform the method for article transportation provided in the embodiments of the disclosure. For example, the hardware decoding processor may be one or more Application-Specific Integrated Circuits (ASICs), DSPs, Programmable Logic Devices (PLDs), Complex PLDs (CPLDs), Field-Programmable Gate Arrays (FPGAs), or other electronic elements.

The method for article transportation provided in the embodiments of the disclosure will be described with reference to exemplary application and implementation of a terminal provided in the embodiments of the disclosure.

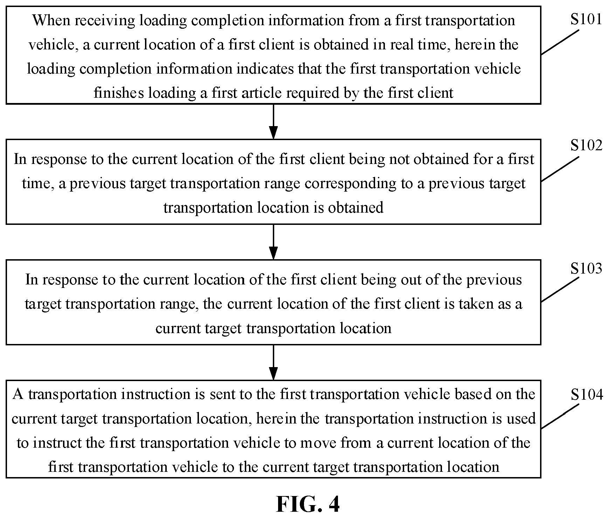

FIG. 4 is an optional schematic flowchart of a method for article transportation according to an embodiment of the disclosure, which will be described with reference to operations shown in FIG. 4.

In S 101, when receiving loading completion information from a first transportation vehicle, a current location of a first client is obtained in real time, herein the loading completion information indicates that the first transportation vehicle finishes loading a first article required by the first client.

In the embodiments of the disclosure, the first transportation vehicle is one of a plurality of transportation vehicles scheduled by a control device to transport the first article required by the first client.

In the embodiments of the disclosure, after receiving the loading completion information, the control device may determine that the first transportation vehicle finishes loading the first article and start to obtain the current location of the first client in real time.

In the embodiments of the disclosure, the control device may continuously obtain the current location of the first client or obtain the current location of the first client at a preset time interval. The way to obtain the current location of the first client is not limited in the embodiments of the disclosure.

In S102, in response to the current location of the first client being not obtained for a first time, a previous target transportation range corresponding to a previous target transportation location is obtained.

In the embodiments of the disclosure, the control device determines whether each obtained location of the first client is obtained for the first time after the current location of the first client starts to be obtained in real time. In response to the current location of the first client being not obtained for the first time, the previous target transportation range corresponding to the previous target transportation location is obtained.

In the embodiments of the disclosure, the previous target transportation range is determined based on the previous target transportation location. In other words, a corresponding target transportation range can be determined based on each target transportation location, and each target transportation range is used to determine a next target transportation location.

The previous target transportation location is a previous target transportation location of the first transportation vehicle. The target transportation location of the first transportation vehicle may be determined based on the real-time location of the first client.

In the embodiments of the disclosure, the previous target transportation range may be a preset range centered on the previous target transportation location.

For example, the previous target transportation range may be a circular range centered on the previous target transportation location. A distance between a location within the circular range and the previous target transportation location is less than a radius of the circle. Alternatively, the previous target transportation range may be a rectangular range centered on the previous target transportation location. Alternatively, the previous target transportation range may be a range in which a length of a path to the previous target transportation location is less than a preset length. The previous target transportation range may be set as required. This is not limited in the embodiments of the disclosure.

In S103, in response to the current location of the first client being out of the previous target transportation range, the current location of the first client is taken as a current target transportation location.

In the embodiments of the disclosure, if the control device determines that the current location of the first client is out of a first range, the current location of the first client is taken as the current target transportation location.

In the embodiments of the disclosure, after determining the current target transportation location, the control device may determine a current target transportation range corresponding to the current target transportation location, and determine a next target transportation range based on the current target transportation range and a next location of the first client.

In the embodiments of the disclosure, if the control device determines that the current location of the first client is within the previous target transportation range, the previous target transportation location is taken as the current target transportation location, that is, the target transportation location of the first transportation vehicle is unchanged.

In S104, a transportation instruction is sent to the first transportation vehicle based on the current target transportation location, herein the transportation instruction is used to instruct the first transportation vehicle to move from a current location of the first transportation vehicle to the current target transportation location.

In the embodiments of the disclosure, after determining the current target transportation location, the control device needs to generate the transportation instruction based on the current target transportation location, and send the transportation instruction to the first transportation vehicle to instruct the first transportation vehicle to move from the current location of the first transportation vehicle to the current target transportation location.

It can be understood that the control device can update the current target transportation location in time based on the real-time location of the first client such that the first transportation vehicle can transport the first article to the current location of the first client in time, to improve transportation efficiency.

In some embodiments of the disclosure, after the current location of the first client is obtained in real time in S101 and before the transportation instruction is sent to the first transportation vehicle based on the current target transportation location in S104, in response to the current location of the first client being obtained for the first time, the control device takes the current location obtained for the first time as the current target transportation location.

In the embodiments of the disclosure, after receiving the loading completion information, the control device starts to obtain the current location of the first client in real time. The current location of the first client obtained for the first time is a current location obtained for the first time.

In the embodiments of the disclosure, after determining the current location obtained for the first time as the current target transportation location, the control device determines the current target transportation range based on the current target transportation location. After obtaining the next current location of the first client, the control device may determine, based on the current target transportation range, whether to take the next current location of the first client as the next target transportation location.

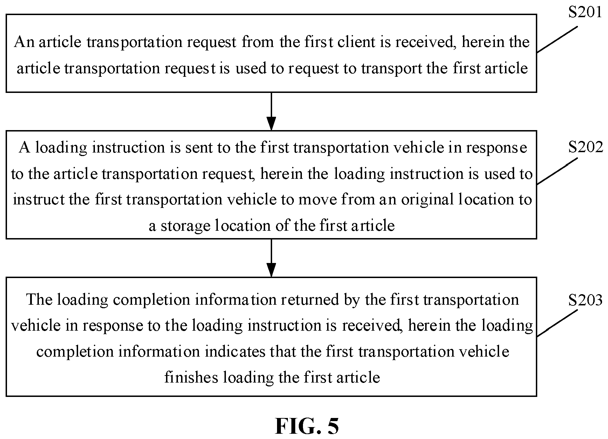

In some embodiments of the disclosure, before the current location of the first client is obtained in real time in S101, the method may further include S201 to S203, as shown in FIG. 5.

In S201, an article transportation request from the first client is received, herein the article transportation request is used to request to transport the first article.

In the embodiments of the disclosure, the control device may receive a plurality of article transportation requests from a plurality of clients in an article transportation system. The article transportation request of the first client is used to request to transport the first article.

In the embodiments of the disclosure, the first article may be one or more articles. This is not limited in the embodiments of the disclosure.

For example, an article ordering application is installed on the first client. A user places a first order through the article ordering application on the first client. The first order is the article transportation request of the first client. The first order includes the first article. After obtaining the first order, the control device may know what the first article is, and then control the first transportation vehicle to transport the first article to the location of the first client such that the user can obtain the ordered first article from the first transportation vehicle.

In S202, a loading instruction is sent to the first transportation vehicle in response to the article transportation request, herein the loading instruction is used to instruct the first transportation vehicle to move from an original location to a storage location of the first article.

In the embodiments of the disclosure, after receiving the article transportation request from the first client, the control device sends the loading instruction to the first transportation vehicle in response to the article transportation request from the first client, and schedules, through the loading instruction, the first transportation vehicle from the plurality of transportation vehicles to transport the first article.

In the embodiments of the disclosure, the loading instruction includes the storage location of the first article. After receiving the loading instruction, the first transportation vehicle may move from the original location of the first transportation vehicle to the storage location of the first article based on the loading instruction, and load the first article at the storage location of the first article.

In the embodiments of the disclosure, when the plurality of transportation vehicles in the article transportation system are not scheduled, the plurality of transportation vehicles stay at original locations to wait to be scheduled by the control device.

In the embodiments of the disclosure, if the first article includes a plurality of articles, the loading instruction includes a plurality of storage locations corresponding to the plurality of articles such that the first transportation vehicle can sequentially move to the plurality of storage locations to load the plurality of articles.

In S203, the loading completion information returned by the first transportation vehicle in response to the loading instruction is received, herein the loading completion information indicates that the first transportation vehicle finishes loading the first article.

In the embodiments of the disclosure, after sending the loading instruction to the first transportation vehicle, the control device may receive the loading completion information returned by the first transportation vehicle such that the control device can determine that the first article is loaded on the first transportation vehicle.

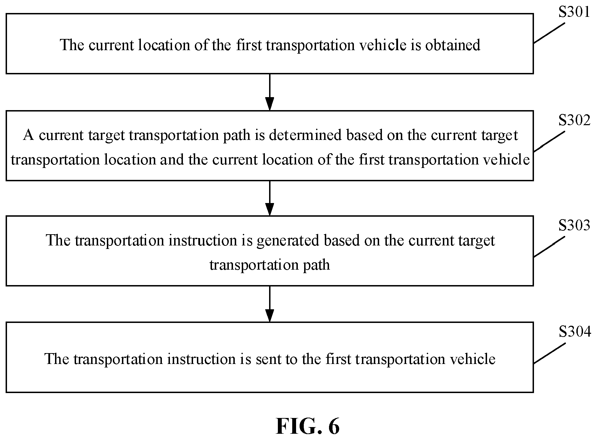

In some embodiments of the disclosure, the operation that the transportation instruction is sent to the first transportation vehicle based on the current target transportation location in S104 may include S301 to S304, as shown in FIG. 6.

In S301, the current location of the first transportation vehicle is obtained.

In S302, a current target transportation path is determined based on the current target transportation location and the current location of the first transportation vehicle.

In the embodiments of the disclosure, after determining the current target transportation location, the control device needs to obtain the current location of the first transportation vehicle, and determine, based on the current target transportation location and the current location of the first transportation vehicle, the current target transportation path for the first transportation vehicle to move from the current location of the first transportation vehicle to the current target transportation location.

In the embodiments of the disclosure, after the control device takes the current location obtained for the first time as the current target transportation location, the obtained current location of the first transportation vehicle is the storage location of the first article. The current target transportation path is a path from the storage location of the first article to the current location obtained for the first time.

In the embodiments of the disclosure, the first transportation vehicle continuously moves to the previous target transportation location. If the current target transportation location is different from the previous target transportation location, the location of the first transportation vehicle is no longer the storage location of the first article. The control device needs to obtain the current location of the first transportation vehicle, and determine the current target transportation path based on the current location of the first transportation vehicle.

In some embodiments of the disclosure, the operation that the current target transportation path is determined based on the current target transportation location and the current location of the first transportation vehicle in S302 may include S401 and S402.

In S401, at least one current transportation path between the current location of the first transportation vehicle and the current target transportation location is determined.

In the embodiments of the disclosure, there may be at least one path from the current location of the first transportation vehicle to the current target transportation location, namely, at least one first transportation path. The control device needs to determine the at least one current transportation path.

In some embodiments of the disclosure, the control device may traverse all paths between the current location of the first transportation vehicle and the current target transportation location through a graph search algorithm to obtain the at least one current transportation path.

In the embodiments of the disclosure, the graph search algorithm may be a breadth-first search algorithm or a depth-first search algorithm. This is not limited in the embodiments of the disclosure.

In S402, the current target transportation path is determined based on the at least one current transportation path.

In the embodiments of the disclosure, after obtaining the at least one current transportation path, the control device may determine the current target transportation path from the at least one current transportation path.

In some embodiments of the disclosure, if there is only one current transportation path, the control device takes the current transportation path as the current target transportation path.

In some embodiments of the disclosure, if there are two or more current transportation paths, the control device may select any one of the current transportation paths as the current target transportation path.

In some embodiments of the disclosure, if there are two or more current transportation paths, the control device may select a shortest current transportation path as the current target transportation path.

In S303, the transportation instruction is generated based on the current target transportation path.

In the embodiments of the disclosure, after determining the current target transportation path, the control device generates the transportation instruction to carry the current target transportation path in the transportation instruction, and instructs, through the current target transportation path, the first transportation vehicle to move from the current location of the first transportation vehicle to the current target transportation location.

In S304, the transportation instruction is sent to the first transportation vehicle.

In the embodiments of the disclosure, after generating the transportation instruction, the control device sends the transportation instruction to the first transportation vehicle. In this way, after receiving the transportation instruction, the first transportation vehicle can obtain the current target transportation path, and then move based on the current target transportation path.

In some embodiments of the disclosure, after the operation that the transportation instruction is sent to the first transportation vehicle based on the current target transportation location in S104, the method may further include S501 and S502.

In S501, target transportation location arrival information from the first transportation vehicle is received, herein the target transportation location arrival information indicates that the first transportation vehicle arrives at the current target transportation location.

In the embodiments of the disclosure, after sending the transportation instruction to the first transportation vehicle, the control device may receive the target transportation location arrival information from the first transportation vehicle, and determine, based on the target transportation location arrival information, that the first transportation vehicle arrives at the current target transportation location.

In S502, the current location of the first client stops being obtained in real time.

In the embodiments of the disclosure, after determining that the first transportation vehicle arrives at the current target transportation location, the control device may stop obtaining the current location of the first client in real time.

It can be understood that after the first transportation vehicle arrives at the current target transportation location, the control device stops obtaining the current location of the first client in real time to reduce resource consumption of the control device.

In some embodiments of the disclosure, after the operation that the current location of the first client stops being obtained in real time in S502, the method may further include S601 and S602.

In S601, it is determined whether article transportation success information is received within a preset time period, herein the article transportation completion information indicates that the first article is unloaded at the current target transportation location.

In S602, in response to the article transportation success information being received within the preset time period, a return instruction is sent to the first transportation vehicle, herein the return instruction is used to instruct the first transportation vehicle to return to an original location.

In the embodiments of the disclosure, after receiving the target transportation location arrival information, the control device may determine whether the article transportation success information is received within the preset time period. If yes, the first article is successfully unloaded from the first transportation vehicle after the first transportation vehicle arrives at the current target transportation location. In this case, the control device sends the return instruction to the first transportation vehicle to instruct the first transportation vehicle to return to the original location.

It can be understood that when the first transportation vehicle successfully finishes transporting the first article, the control device controls the first transportation vehicle to return to the original location and wait for a new schedule.

In some embodiments of the disclosure, after the operation that it is determined whether the article transportation success information is received within the preset time period in S601, the method may further include S701 to S703.

In S701, in response to the article transportation success information being not received within the preset time period, a new location of the first client is obtained.

In S702, in response to the new location of the first client being within the current target transportation range, it is determined that the transportation fails.

In the embodiments of the disclosure, if the control device determines that the article transportation success information is not received within the preset time period, the control device re-obtains the real-time location of the first client to obtain the new location of the first client, determines whether the new location of the first client is within the current target transportation range, and if yes, determines that the transportation fails.

In S703, an article unloading instruction is sent to the first transportation vehicle in a case that the transportation fails, herein the article unloading instruction is used to instruct the first transportation vehicle to move to a storage location of the first article, unload the first article, and return to the original location after unloading.

In the embodiments of the disclosure, when determining that the transportation fails, the control device needs to send the article unloading instruction to the first transportation vehicle to instruct the first transportation vehicle to move to the storage location of the first article, unload the first article at the storage location of the first article, and then return to the original location.

It can be understood that when determining that the first transportation vehicle fails to transport the first article, the control device controls the first transportation vehicle to move to the storage location of the first article, unload the first article, and then return to the original location. In this way, after receiving an article transportation request from another client, the control device can schedule the first transportation vehicle to transport an article required by the another client. This improves a transportation capability of the transportation vehicle.

In some embodiments of the disclosure, after the new location of the first client is obtained, if the control device determines that the new location of the first client is out of the current target transportation range, the control device may take the new location of the first client as a new target transportation location; and send a new transportation instruction to the first transportation vehicle based on the new target transportation location. The new transportation instruction is used to instruct the first transportation vehicle to move from the current target location to the new target transportation location.

It should be noted that after the first transportation vehicle arrives at the current target transportation location, if the control device determines that the article transportation success information is not received within the preset time period, the control device may obtain the new location of the first client, and determine whether the new location of the first client is out of the current target transportation range corresponding to the current target transportation location. If yes, the control device controls the first transportation vehicle to move to the new location of the first client.

In some embodiments of the disclosure, after the operation that the article unloading instruction is sent to the first transportation vehicle in S703, the method may further include S801 and S802.

In S801, unloading completion information returned by the first transportation vehicle based on the article unloading instruction is received.

In the embodiments of the disclosure, after sending the article unloading instruction to the first transportation vehicle, the control device may receive the article unloading completion information returned by the first transportation vehicle. The control device may determine, based on the article unloading completion information, that the first transportation vehicle has returned the loaded first article to the storage location of the first article.

In S802, the return instruction is sent to the first transportation vehicle in response to the unloading completion information.

In the embodiments of the disclosure, after receiving the article unloading completion information, the control device sends the return instruction to the first transportation vehicle to instruct the first transportation vehicle to return to the original location.

It can be understood that if the first transportation vehicle fails to transport the first article, the control device may control the first transportation vehicle to return the first article to the storage location of the first article, and return to the original location to wait for a next transportation schedule, to improve the transportation capability of the transportation vehicle.

In some embodiments of the disclosure, after the current location of the first client is obtained in real time in S101, and before the previous target transportation range is obtained in response to the current location of the first client being not obtained for the first time in S102, the method may further include S901 and S902.

In S901, it is determined whether the current location of the first client is within a movement range of the first transportation vehicle.

In S902, in response to the current location of the first client being out of the movement range of the first transportation vehicle, out-of-range prompt information is sent to the first client.

In the embodiments of the disclosure, the control device needs to determine whether the current location of the first client is within the movement range of the first transportation vehicle each time the control device obtains the current location of the first client. If the current location of the first client is out of the movement range of the first transportation vehicle, the control device needs to send the out-of-range prompt information to the first client to prompt the user of the first client to return to the movement range of the first transportation vehicle.

In some embodiments of the disclosure, after it is determined whether the current location of the first client is within the movement range of the first transportation vehicle in S901, the operation that the previous target transportation range is obtained in response to the current location of the first client being not obtained for the first time in S 102 may include the following operations.

In S9011, in response to the current location of the first client being within the movement range of the first transportation vehicle, it is determined whether the current location of the first client is obtained for the first time.

In S9012, in response to the current location of the first client being not obtained for the first time, the previous target transportation location is obtained.

In the embodiments of the disclosure, if the control device determines that the current location of the first client is within the movement range of the first transportation vehicle, the control device may determine whether the current location of the first client is obtained for the first time, and if yes, obtain the previous target transportation range.

It can be understood that if the current location of the first client is out of the movement range of the first transportation vehicle, the first transportation vehicle cannot move to the current location of the first client. The control device does not need to determine whether the current target transportation range needs to be updated. This reduces the resource consumption of the control device.

In some embodiments of the disclosure, the movement range of the first transportation vehicle may be preset, or may be adjusted based on an actual transportation situation. Movement ranges of the plurality of transportation vehicles in the article transportation system may be the same or different. This is not limited in the embodiments of the disclosure.

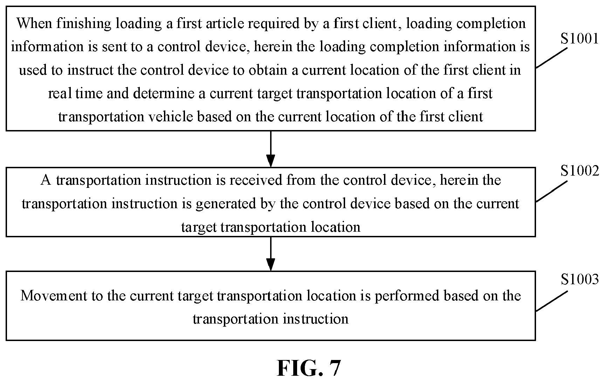

FIG. 7 is an optional schematic flowchart of a method for article transportation according to an embodiment of the disclosure, which will be described with reference to operations shown in FIG. 7.

In S1001, when finishing loading a first article required by a first client, loading completion information is sent to a control device, herein the loading completion information is used to instruct the control device to obtain a current location of the first client in real time and determine a current target transportation location of a first transportation vehicle based on the current location of the first client.

In the embodiments of the disclosure, after finishing loading the first article required by the first client, the first transportation vehicle may send the loading completion information to the control device, and instruct, through the loading completion information, the control device to obtain the current location of the first client in real time. Then, the control device may determine the current target transportation location of the first transportation vehicle in time based on the current location of the first client.

A method for determining the current target transportation location by the control device has been described in detail on the control device side. Details are not described herein again.

In S1002, a transportation instruction is received from the control device, herein the transportation instruction is generated by the control device based on the current target transportation location.

In S 1003, movement to the current target transportation location is performed based on the transportation instruction.

In the embodiments of the disclosure, after sending the loading completion information to the control device, the first transportation vehicle may receive the transportation instruction from the control device. The first transportation vehicle moves to the current target transportation location based on the transportation instruction to transport the first article to the current target transportation location.

It should be noted that after sending the loading completion information to the control device, the first transportation vehicle may receive a plurality of transportation instructions in real time. The first transportation vehicle may transport the first article to thecurrent target transportation location based on the current transportation instruction.

It can be understood that the first transportation vehicle may receive the current transportation instruction generated by the control device based on the current location of the first client, and move based on the current real-time transportation instruction such that the first article can be transported to the current location of the first client.

In some embodiments of the disclosure, before the operation that the loading completion information is sent to the control device in S1001, the method may further include S1101 and S 1102.

In S1101, a loading instruction from the control device is received.

In S1102, in response to the loading instruction, movement from a storage location of the first article to the storage location of the first article is performed and the loading of the first article is finished at the storage location of the first article.

In the embodiments of the disclosure, the first transportation vehicle may receive the loading instruction from the control device, and thus be scheduled by the control device. The loading instruction includes the storage location of the first article. Then, the first transportation vehicle may move from the original location to the storage location of the first article and load the first article at the storage location of the first article in response to the loading instruction.

When the first transportation vehicle is not scheduled, the first transportation vehicle stays at the original location to wait to be scheduled.

In some embodiments of the disclosure, the transportation instruction sent by the control device to the first transportation vehicle includes a current target transportation path. After receiving the transportation instruction, the first transportation vehicle may move from a current location of the first transportation vehicle to the current target transportation location along the current target transportation path.

It should be noted that each time the first transportation vehicle receives a transportation instruction, a current target transportation path is obtained. The current target transportation path is used to instruct the first transportation vehicle to move from the current location of the first transportation vehicle to the current target transportation location.

In some embodiments of the disclosure, after arriving at the current target transportation location, the first transportation vehicle returns target transportation location arrival information to the control device. The target transportation location arrival information indicates that the first transportation vehicle arrives at the current target transportation location.

In the embodiments of the disclosure, after arriving at the current target transportation location, the first transportation vehicle may send the target transportation location arrival information to the control device such that the control device can know that the first transportation vehicle arrives at the current target transportation location.

The current target transportation location is a target transportation location indicated by a last transportation instruction received by the first transportation vehicle.

In some embodiments of the disclosure, after returning the target transportation location arrival information to the control device, if the first transportation vehicle determines that the first article is unloaded from the first transportation vehicle, the first transportation vehicle sends article transportation success information to the control device.

In the embodiments of the disclosure, after arriving at the current target transportation location, the first transportation vehicle may monitor whether the first article is unloaded from the first transportation vehicle. If the first article is unloaded, the first transportation vehicle sends the article transportation success information to the control device to notify the control device that the first article is successfully transported.

In the embodiments of the disclosure, the first transportation vehicle may determine, based on a carrying weight, whether the first article is unloaded; or send article unloading confirmation information to the first client, and after the first client responds to the article unloading confirmation information, determine, based on a response result, whether the first article is unloaded. The response result may be not unloaded or unloaded. The way to determine whether the first article is unloaded by the first transportation vehicle may be set as required and is not limited in the embodiments of the disclosure.

In some embodiments of the disclosure, after returning the target transportation location arrival information to the control device, the first transportation vehicle may receive a new transportation instruction. The first transportation vehicle may move from the current target transportation location to a new target transportation location based on the new transportation instruction.

In some embodiments of the disclosure, after arriving at the current target transportation location, the first transportation vehicle may send article unloading prompt information to the first client. The article unloading prompt information is used to prompt a user of the first client to unload the first article.

In the embodiments of the disclosure, after arriving at the current target transportation location, the first transportation vehicle may further send the article unloading prompt information to the first client. After receiving the article unloading prompt information, the user of the first client may know that the first transportation vehicle arrives at the location of the first client. The user may obtain the first article from the first transportation vehicle.

It can be understood that after the first transportation vehicle arrives at the current target transportation location, the user of the first client may not notice that the first transportation vehicle arrives. The first transportation vehicle may send the article unloading prompt information to the first client to remind the user of the first client to unload the first article from the first transportation vehicle. This prevents the transportation from failing because the user does not notice that the first transportation vehicle arrives and improves the transportation success rate of the first transportation vehicle.

In some embodiments of the disclosure, the first client may send the article unloading prompt information by playing voice prompt information, and prompt, through the voice prompt information, the user of the first client to unload the first article.

It can be understood that after the first transportation vehicle arrives at the current target transportation location, the user of the first client may not notice that the first transportation vehicle arrives. The first transportation vehicle may play the voice prompt information. After hearing the voice prompt information, the user of the first client may determine that the first transportation vehicle arrives and the first article can be unloaded.

In some embodiments of the disclosure, after the first transportation vehicle loads the first article, the first article is locked in the first transportation vehicle. After the first transportation vehicle arrives at the current target transportation location and plays the voice prompt information, the method may further include S 1201 and S 1202.

In S1201, unloading verification information from the first client is received. The unloading verification information is a response of the first client to the article unloading prompt information.

In the embodiments of the disclosure, the first article is locked in the first transportation vehicle. If the user of the first client needs to unload the first article, the user may provide the unloading verification information to the first transportation vehicle to unlock the first article after receiving the article unloading prompt information.

In S1202, in response to the unloading verification information matching unloading verification information of the first article, the first article in the first transportation vehicle is unlocked to enable the first article to be unloaded from the first transportation vehicle.

In the embodiments of the disclosure, after receiving the unloading verification information, the first transportation vehicle matches the unloading verification information with unloading verification information of the first article. If the matching is successful, the first transportation vehicle may determine that the first client is a client that requires the first article, that is, an identity of the first client is successfully verified. The first article may be unlocked, and the first client is allowed to obtain the first article.

In the embodiments of the disclosure, the unloading verification information of the first article in the first transportation vehicle and the unloading verification information of the first client may be configured by the control device. For example, after receiving an article transportation request from the first client, the control device may allocate the unloading verification information to the first client. When the control device sends the article loading instruction to the first transportation vehicle, the instruction carries the unloading verification information of the first article such that the first transportation vehicle can verify the identity of the first client based on the unloading verification information of the first article.

For example, the unloading verification information may be a two-dimensional verification code. The first transportation vehicle may scan the two-dimensional verification code provided by the first client to obtain the unloading verification information of the first client. Alternatively, the unloading verification information may be a verification code composed of letters and/or digits. The user may input the verification code on the first transportation vehicle such that the first transportation vehicle obtains the unloading verification information. A setting of the unloading verification information is not limited in the embodiments of the disclosure.

It can be understood that after the first transportation vehicle arrives at the current target transportation location, if the user of the first client needs to obtain the first article, the unloading verification information needs to be provided to the first transportation vehicle. When the first transportation vehicle determines that the unloading verification information is the unloading verification information of the first article, the first transportation vehicle unlocks the first article such that the user can obtain the first article. This prevents other users from obtaining the first article and improves article transportation security.

In some embodiments of the disclosure, after sending the article transportation success information to the control device, the first transportation vehicle may receive a return instruction that is returned by the control device in response to the article transportation success information; and move to an original location in response to the return instruction.

In the embodiments of the disclosure, if the first article in the first transportation vehicle is successfully unloaded by the first client, the return instruction from the control device is received. The first transportation vehicle returns to the original location based on the return instruction to wait for a next schedule.

In some embodiments of the disclosure, after the first transportation vehicle sends the target transportation location arrival information to the control device, the method may further include S1301 and S1302.

In S1301, an article unloading instruction returned by the control device in response to the target transportation location arrival information is received.

In the embodiments of the disclosure, after the first transportation vehicle sends the target transportation location arrival information to the control device, if the control device does not receive the article transportation success information sent by the first transportation vehicle within a preset time period, the control device sends the article unloading instruction to the first transportation vehicle. The article unloading instruction is used to instruct the first transportation vehicle to unload the first article and then return to the original location.

In S1302, in response to the article unloading return instruction, movement to a storage location of the first article is performed, the first article is unloaded, and the original location is returned to.

In the embodiments of the disclosure, after receiving the article unloading instruction, the first transportation vehicle moves to the storage location of the first article, unloads the first article at the storage location of the first article, and then returns to the original location in response to the article unloading instruction.

It can be understood that when failing to transport the first article, the first transportation vehicle may unload the first article, return to the original location, wait for a next schedule, and after receiving a next article loading instruction, transport an article required by a next client.

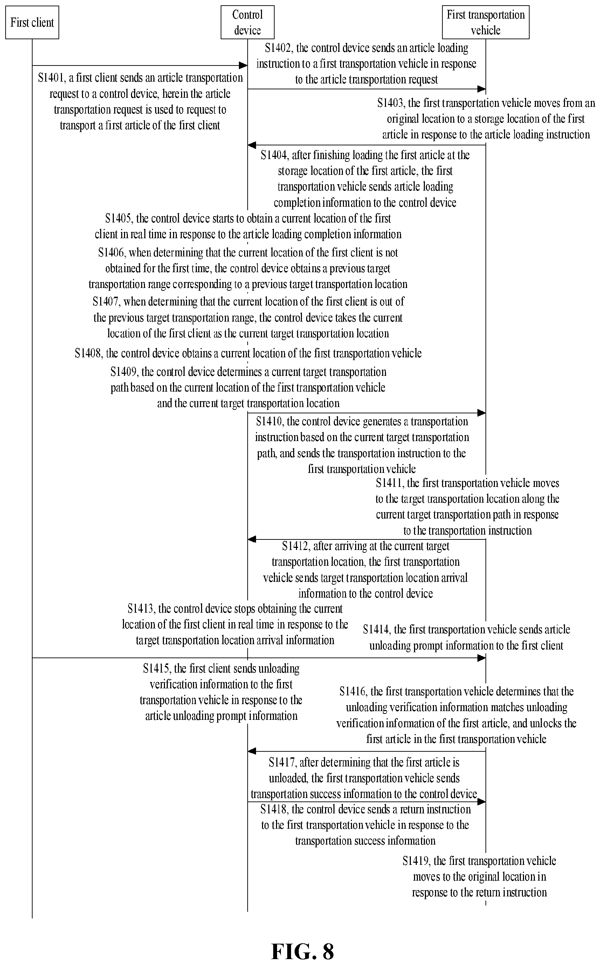

FIG. 8 is a schematic diagram of an interaction process between a control device and a first transportation vehicle according to an embodiment of the disclosure, which will be described with reference to operations shown in FIG. 8.

In S1401, a first client sends an article transportation request to a control device, herein the article transportation request is used to request to transport a first article of the first client.

In S 1402, the control device sends an article loading instruction to a first transportation vehicle in response to the article transportation request.

In S1403, the first transportation vehicle moves from an original location to a storage location of the first article in response to the article loading instruction.

In S1404, after finishing loading the first article at the storage location of the first article, the first transportation vehicle sends article loading completion information to the control device.

In S1405, the control device starts to obtain a current location of the first client in real time in response to the article loading completion information.

In S1406, when determining that the current location of the first client is not obtained for the first time, the control device obtains a previous target transportation range corresponding to a previous target transportation location.

In the embodiments of the disclosure, if the control device determines that the current location of the first client is obtained for the first time, the control device takes the previous target transportation location as a current target transportation location, that is, the target transportation location is unchanged.

In S1407, when determining that the current location of the first client is out of the previous target transportation range, the control device takes the current location of the first client as the current target transportation location.

In S1408, the control device obtains a current location of the first transportation vehicle.

In S1409, the control device determines a current target transportation path based on the current location of the first transportation vehicle and the current target transportation location.

In S1410, the control device generates a transportation instruction based on the current target transportation path, and sends the transportation instruction to the first transportation vehicle.

In S1411, the first transportation vehicle moves to the target transportation location along the current target transportation path in response to the transportation instruction.

In S 1412, after arriving at the current target transportation location, the first transportation vehicle sends target transportation location arrival information to the control device.

In S1413, the control device stops obtaining the current location of the first client in real time in response to the target transportation location arrival information.

In S1414, the first transportation vehicle sends article unloading prompt information to the first client.

In S1415, the first client sends unloading verification information to the first transportation vehicle in response to the article unloading prompt information.

In S1416, the first transportation vehicle determines that the unloading verification information matches unloading verification information of the first article, and unlocks the first article in the first transportation vehicle.

In S1417, after determining that the first article is unloaded, the first transportation vehicle sends transportation success information to the control device.

In S1418, the control device sends a return instruction to the first transportation vehicle in response to the transportation success information.

In S1419, the first transportation vehicle moves to the original location in response to the return instruction.

In the embodiments of the disclosure, the first client sends the article transportation request to the control device, and requests, through the article transportation request, the control device to transport the first article required by the first client. The control device instructs, based on the article transportation request, the first transportation vehicle to load the first article. After finishing loading the first article, the first transportation vehicle sends the loading completion information to the control device to instruct the control device to start obtaining the current location of the first client in real time. The control device may determine the current target transportation location based on the current location of the first client obtained each time, and then determine the current target transportation path; and control, through the current target transportation path, the first transportation vehicle to move to the current target transportation path. After arriving at the current target transportation location, the first transportation vehicle sends the article unloading prompt information to the first client to prompt the first client to unload the first article. After receiving the article unloading prompt information, the first client sends the unloading verification information to the first transportation vehicle. When the first transportation vehicle determines that the unloading verification information matches the unloading verification information of the first article, the first article in the first transportation vehicle is unlocked such that a user of the first client can obtain the first article. After the first article is unloaded, the first transportation vehicle returns the transportation success information to the control device. The control device sends the return instruction to the first transportation vehicle based on the transportation success information to instruct the first transportation vehicle to return to the original location.

The following describes an exemplary structure of software modules of a first article transportation apparatus 755 provided in the embodiments of the disclosure. In some embodiments, as shown in FIG. 2, the first article transportation apparatus 755 stored in the first memory 750 may include the following software modules.

A first receiving module 7551, configured to: when receiving loading completion information from a first transportation vehicle, obtain a current location of a first client in real time, herein the loading completion information indicates that the first transportation vehicle finishes loading a first article required by the first client.

An obtaining module 7552, configured to: in response to the current location of the first client being not obtained for a first time, obtain a previous target transportation range corresponding to a previous target transportation location.

An adoption module 7553, configured to: in response to the current location of the first client being out of the previous target transportation range, take the current location of the first client as a current target transportation location.

A first sending module 7554, configured to send a transportation instruction to the first transportation vehicle based on the current target transportation location, herein the transportation instruction is used to instruct the first transportation vehicle to move from a current location of the first transportation vehicle to the current target transportation location.

In an implementation of the embodiments of the disclosure, the obtaining module 7552 is further configured to: after obtaining the previous target transportation range, in response to the current location of the first client being within the previous target transportation range, take the previous target transportation location as the current target transportation location.

In an implementation of the embodiments of the disclosure, the previous target transportation range is a preset range centered on the previous target transportation location.

In an implementation of the embodiments of the disclosure, the adoption module 7553 is further configured to: after obtaining the current location of the first client in real time and before sending the transportation instruction to the first transportation vehicle based on the current target transportation location, in response to the current location of the first client being obtained for the first time, take the current location of the first client as the current target transportation location.

In an implementation of the embodiments of the disclosure, the first receiving module 7551 is further configured to: before obtaining the current location of the first client in real time, receive an article transportation request from the first client. The article transportation request is used to request to transport the first article. The first sending module 7554 is further configured to send a loading instruction to the first transportation vehicle in response to the article transportation request. The loading instruction is used to instruct the first transportation vehicle to move from an original location to a storage location of the first article. The first receiving module 7551 is further configured to receive the loading completion information returned by the first transportation vehicle in response to the loading instruction. The loading completion information indicates that the first transportation vehicle finishes loading the first article.

In an implementation of the embodiments of the disclosure, the first sending module 7554 is further configured to obtain the current location of the first transportation vehicle; determine a current target transportation path based on the current target transportation location and the current location of the first transportation vehicle; generate the transportation instruction based on the current target transportation path; and send the transportation instruction to the first transportation vehicle.

In an implementation of the embodiments of the disclosure, the first sending module 7554 is further configured to determine at least one current transportation path between the current location of the first transportation vehicle and the current target transportation location; and determine the current target transportation path based on the at least one current transportation path.

In an implementation of the embodiments of the disclosure, the first sending module 7554 is further configured to traverse all paths between the current location of the first transportation vehicle and the current target transportation location through a graph search algorithm to obtain the at least one current transportation path.

In an implementation of the embodiments of the disclosure, a number of the at least one current transportation path is two or more. The first sending module 7554 is further configured to determine a shortest first transportation path among the at least one current transportation path as the current target transportation path.

In an implementation of the embodiments of the disclosure, the first receiving module 7551 is further configured to: after sending the transportation instruction to the first transportation vehicle based on the current target transportation location, receive target transportation location arrival information from the first transportation vehicle, herein the target transportation location arrival information indicates that the first transportation vehicle arrives at the current target transportation location; and stop obtaining the current location of the first client in real time.

In an implementation of the embodiments of the disclosure, the first sending module 7554 is further configured to: after stopping obtaining the current location of the first client in real time, determine whether article transportation success information is received within a preset time period, herein the article transportation completion information indicates that the first article is unloaded at the current target transportation location; and in response to the article transportation success information being received within the preset time period, send a return instruction to the first transportation vehicle, herein the return instruction is used to instruct the first transportation vehicle to return to an original location.

In an implementation of the embodiments of the disclosure, the obtaining module 7552 is further configured to: after determining whether the article transportation success information is received within the preset time period, in response to the article transportation success information being not received within the preset time period, obtain a new location of the first client; and in response to the new location of the first client being within a current target transportation range, determine that a transportation fails. The first sending module 7554 is further configured to send an article unloading instruction to the first transportation vehicle in a case that the transportation fails. The article unloading instruction is used to instruct the first transportation vehicle to move to a storage location of the first article, unload the first article, and return to the original location after unloading.

In an implementation of the embodiments of the disclosure, the first sending module 7554 is further configured to: after obtaining the new location of the first client, in response to the new location of the first client being out of the current target transportation range, take the new location of the first client as a new target transportation location; and send a new transportation instruction to the first transportation vehicle based on the new target transportation location, herein the new transportation instruction is used to instruct the first transportation vehicle to move from the current target location to the new target transportation location.

In an implementation of the embodiments of the disclosure, the first receiving module 7551 is further configured to: after sending the article unloading instruction to the first transportation vehicle, receive unloading completion information returned by the first transportation vehicle based on the article unloading instruction. The first sending module 7554 is further configured to send the return instruction to the first transportation vehicle in response to the unloading completion information.

In an implementation of the embodiments of the disclosure, the first sending module 7554 is further configured to: after obtaining the current location of the first client in real time, and before obtaining the previous target transportation range in response to the current location of the first client being not obtained for the first time, determine whether the current location of the first client is within a movement range of the first transportation vehicle; and in response to the current location of the first client being out of the movement range of the first transportation vehicle, send out-of-range prompt information to the first client.

In an implementation of the embodiments of the disclosure, the obtaining module 7552 is further configured to: in response to the current location of the first client being within the movement range of the first transportation vehicle, determine whether the current location of the first client is obtained for the first time; and in response to the current location of the first client being not obtained for the first time, obtain the previous target transportation location.

The following describes an exemplary structure of software modules of a second article transportation apparatus 655 provided in the embodiments of the disclosure. In some embodiments, as shown in FIG. 3, the second article transportation apparatus 655 stored in the second memory 650 may include the following software modules.

The second sending module 6551 is configured to: when finishing loading a first article required by a first client, send loading completion information to a control device. The loading completion information is used to instruct the control device to obtain a current location of the first client in real time and determine a current target transportation location of a first transportation vehicle based on the current location of the first client.

The second receiving module 6552 is configured to receive a transportation instruction from the control device. The transportation instruction is generated by the control device based on the current target transportation location.

The movement module 6553 is configured to move to the current target transportation location based on the transportation instruction.

In an implementation of the embodiments of the disclosure, the second receiving module 6552 is further configured to: before sending the loading completion information to the control device, receive a loading instruction from the control device; and move from an original location to a storage location of the first article and finish loading the first article at the storage location of the first article in response to the loading instruction.

In an implementation of the embodiments of the disclosure, the transportation instruction includes a current target transportation path. The movement module 6553 is further configured to move from a current location of the first transportation vehicle to the current target transportation location along the current target transportation path.

In an implementation of the embodiments of the disclosure, the second sending module 6551 is further configured to: after the first transportation vehicle arrives at the current target transportation location, return target transportation location arrival information to the control device. The target transportation location arrival information indicates that the first transportation vehicle arrives at the current target transportation location.

In an implementation of the embodiments of the disclosure, the second sending module 6551 is further configured to: after returning the target transportation location arrival information to the control device, in response to the first article being unloaded from the first transportation vehicle, send article transportation success information to the control device.

In an implementation of the embodiments of the disclosure, the second receiving module 6552 is further configured to: after returning the target transportation location arrival information to the control device, receive a new transportation instruction. The movement module 6553 is further configured to move from the current target transportation location to a new target transportation location based on the new transportation instruction.

In an implementation of the embodiments of the disclosure, the second sending module 6551 is further configured to: after the first transportation vehicle arrives at the current target transportation location, send article unloading prompt information to the first client. The article unloading prompt information is used to prompt a user of the first client to unload the first article.

In an implementation of the embodiments of the disclosure, the first article is locked in the first transportation vehicle. The second receiving module 6552 is further configured to: after sending the article unloading prompt information, receive unloading verification information from the first client, herein the unloading verification information is a response of the first client to the article unloading prompt information; and in response to the unloading verification information matching unloading verification information of the first article, unlock the first article in the first transportation vehicle to enable the first article to be unloaded from the first transportation vehicle.

In an implementation of the embodiments of the disclosure, the second receiving module 6552 is further configured to: after sending the article transportation success information to the control device, receive a return instruction returned by the control device in response to the article transportation success information. The movement module 6553 is further configured to move to an original location in response to the return instruction.

In an implementation of the embodiments of the disclosure, the second receiving module 6552 is further configured to: after returning the target transportation location arrival information to the control device, receive an article unloading instruction returned by the control device in response to the target transportation location arrival information. The movement module 6553 is further configured to move to a storage location of the first article, unload the first article, and return to an original location in response to the article unloading return instruction.

An embodiment of the disclosure provides a computer program product or a computer program. The computer program product or the computer program includes computer instructions. The computer instructions are stored in a computer-readable storage medium. A processor of a computer device reads the computer instructions from the computer-readable storage medium, and the processor executes the computer instructions to enable the computer device to perform the foregoing method for article transportation in the embodiments of the disclosure.

An embodiment of the disclosure provides a computer-readable storage medium storing executable instructions. The executable instructions, when executed by a processor, enable the processor to perform the methods provided in the embodiments of the disclosure, for example, the methods shown in FIG. 4 to FIG. 8.

In some embodiments, the computer-readable storage medium may be a memory such as a ferroelectric RAM (FRAM), a ROM, a programmable ROM (PROM), an Erasable Programmable ROM (EPROM), an Electrically Erasable Programmable ROM (EEPROM), a flash memory, a magnetic memory, an optical disc, or a Compact Disc ROM (CD-ROM); or may be various devices including one or any combination of the foregoing memories.

In some embodiments, the executable instructions may be written in any type of programming language (including a compiled or interpreted language, or a declarative or procedural language) in a form of a program, software, a software module, a script, or code, and may be deployed in any form, including as an independent program or as a module, component, subroutine, or another unit suitable for use in a computing environment.

For example, the executable instructions may, but do not necessarily, correspond to files in a file system, and may be stored as part of a file that holds other programs or data, such as in one or more scripts stored in a Hyper Text Markup Language (HTML) document, in a single file dedicated to a program in question, or in a plurality of coordinated files (for example, files storing one or more modules, subroutines, or portions of code).

For example, the executable instructions may be deployed to be executed on one computing device, on a plurality of computing devices at one site, or on a plurality of computing devices distributed at a plurality of sites and interconnected through a communication network.

In summary, in the embodiments of the disclosure, the control device can obtain the current location of the first client in real time, determine the current target transportation location and update the current target transportation location in time based on the real-time location of the first client, and then control the first transportation vehicle carrying the first article required by the first client to move to the new current target transportation location in time such that the user of the first client can obtain the first article from the first transportation vehicle in time. This improves the article transportation efficiency. The control device can also control the first transportation vehicle to return the first article to the original storage location and wait for the next transportation schedule when the article fails to be transported, to improve the transportation capability. Further, the control device can configure the unloading verification information of the first client and configure the unloading verification information of the first article for the first transportation vehicle such that the first client is verified based the unloading verification information and the unloading verification information of the first article, to improve the article transportation security. Furthermore, if the first article is not unloaded in time after the first transportation vehicle arrives at the current target transportation location, the first transportation vehicle may send the article unloading prompt information to the first client to prompt the user of the first client to unload the first article. Moreover, after the first transportation vehicle arrives at the current target transportation location, the control device may stop obtaining the current location of the first client in real time to reduce the resource consumption of the control device. In addition, when the user does not unload the first article in time, the control device may obtain the new location of the first client and determine the new target transportation location to improve the article transportation success rate.

The foregoing description is merely the embodiments of the disclosure, and is not intended to limit the protection scope of the disclosure. Any modifications, equivalent replacements, improvements, and like within the spirit and scope of the disclosure shall fall within the protection scope of the disclosure.

### Industrial applicability

In the embodiments of the disclosure, when the loading completion information from the first transportation vehicle is received, the current location of the first client is obtained in real time. The loading completion information indicates that the first transportation vehicle finishes loading the first article required by the first client. In response to the current location of the first client being not obtained for the first time, the previous target transportation range corresponding to the previous target transportation location is obtained. In response to the current location of the first client being out of the previous target transportation range, the current location of the first client is taken as the current target transportation location. The transportation instruction is sent to the first transportation vehicle based on the current target transportation location. The transportation instruction is used to instruct the first transportation vehicle to move from the current location of the first transportation vehicle to the current target transportation location. As such, a path of an unmanned vehicle is planned by obtaining a location of a customer in real time such that the unmanned vehicle can arrive at the latest location of the customer to ensure that an article is delivered to the customer and improve the article transportation efficiency.

## Claims

1. A method for article transportation, comprising:
when receiving loading completion information from a first transportation vehicle, obtaining a current location of a first client in real time, wherein the loading completion information indicates that the first transportation vehicle finishes loading a first article required by the first client;
in response to the current location of the first client being not obtained for a first time, obtaining a previous target transportation range corresponding to a previous target transportation location;
in response to the current location of the first client being out of the previous target transportation range, taking the current location of the first client as a current target transportation location; and
sending a transportation instruction to the first transportation vehicle based on the current target transportation location, wherein the transportation instruction is used to instruct the first transportation vehicle to move from a current location of the first transportation vehicle to the current target transportation location.

2. The method of claim 1, further comprising: after obtaining the previous target transportation range,
in response to the current location of the first client being within the previous target transportation range, taking the previous target transportation location as the current target transportation location.

3. The method of claim 2, wherein the previous target transportation range is a preset range centered on the previous target transportation location.

4. The method of claim 3, further comprising: after obtaining the current location of the first client in real time and before sending the transportation instruction to the first transportation vehicle based on the current target transportation location,
in response to the current location of the first client being obtained for the first time, taking the current location of the first client as the current target transportation location.

5. The method of claim 1, further comprising: before obtaining the current location of the first client in real time,
receiving an article transportation request from the first client, wherein the article transportation request is used to request to transport the first article;
sending a loading instruction to the first transportation vehicle in response to the article transportation request, wherein the loading instruction is used to instruct the first transportation vehicle to move from an original location to a storage location of the first article; and
receiving the loading completion information returned by the first transportation vehicle in response to the loading instruction, wherein the loading completion information indicates that the first transportation vehicle finishes loading the first article.

6. The method of claim 1, wherein sending the transportation instruction to the first transportation vehicle based on the current target transportation location comprises:
obtaining the current location of the first transportation vehicle;
determining a current target transportation path based on the current target transportation location and the current location of the first transportation vehicle;
generating the transportation instruction based on the current target transportation path; and
sending the transportation instruction to the first transportation vehicle.

7. The method of claim 6, wherein determining the current target transportation path based on the current target transportation location and the current location of the first transportation vehicle comprises:
determining at least one current transportation path between the current location of the first transportation vehicle and the current target transportation location; and
determining the current target transportation path based on the at least one current transportation path.

8. The method of claim 7, wherein determining the at least one current transportation path between the current location of the first transportation vehicle and the current target transportation location comprises:
traversing all paths between the current location of the first transportation vehicle and the current target transportation location through a graph search algorithm to obtain the at least one current transportation path.

9. The method of claim 7, wherein a number of the at least one current transportation path is two or more, and determining the current target transportation path based on the at least one current transportation path comprises:
determining a shortest first transportation path among the at least one current transportation path as the current target transportation path.

10. The method of any one of claims 1 to 9, further comprising: after sending the transportation instruction to the first transportation vehicle based on the current target transportation location,
receiving target transportation location arrival information from the first transportation vehicle, wherein the target transportation location arrival information indicates that the first transportation vehicle arrives at the current target transportation location; and
stopping obtaining the current location of the first client in real time.

11. The method of claim 10, further comprising: after stopping obtaining the current location of the first client in real time,
determining whether article transportation success information is received within a preset time period, wherein the article transportation completion information indicates that the first article is unloaded at the current target transportation location; and
in response to the article transportation success information being received within the preset time period, sending a return instruction to the first transportation vehicle, wherein the return instruction is used to instruct the first transportation vehicle to return to an original location.

12. The method of claim 11, further comprising: after determining whether the article transportation success information is received within the preset time period,
in response to the article transportation success information being not received within the preset time period, obtaining a new location of the first client;
in response to the new location of the first client being within a current target transportation range, determining that a transportation fails; and
sending an article unloading instruction to the first transportation vehicle in a case that the transportation fails, wherein the article unloading instruction is used to instruct the first transportation vehicle to move to a storage location of the first article, unload the first article, and return to the original location after unloading.

13. The method of claim 12, further comprising: after obtaining the new location of the first client,
in response to the new location of the first client being out of the current target transportation range, taking the new location of the first client as a new target transportation location; and
sending a new transportation instruction to the first transportation vehicle based on the new target transportation location, wherein the new transportation instruction is used to instruct the first transportation vehicle to move from the current target location to the new target transportation location.

14. The method of claim 12, further comprising: after sending the article unloading instruction to the first transportation vehicle,
receiving unloading completion information returned by the first transportation vehicle based on the article unloading instruction; and
sending the return instruction to the first transportation vehicle in response to the unloading completion information.

15. The method of claim 1, further comprising: after obtaining the current location of the first client in real time, and before obtaining the previous target transportation range in response to the current location of the first client being not obtained for the first time,
determining whether the current location of the first client is within a movement range of the first transportation vehicle; and
in response to the current location of the first client being out of the movement range of the first transportation vehicle, sending out-of-range prompt information to the first client.

16. The method of claim 15, wherein obtaining the previous target transportation range in response to the current location of the first client being not obtained for the first time comprises:
in response to the current location of the first client being within the movement range of the first transportation vehicle, determining whether the current location of the first client is obtained for the first time; and
in response to the current location of the first client being not obtained for the first time, obtaining the previous target transportation location.

17. A method for article transportation, comprising:
when finishing loading a first article required by a first client, sending loading completion information to a control device, wherein the loading completion information is used to instruct the control device to obtain a current location of the first client in real time and determine a current target transportation location of a first transportation vehicle based on the current location of the first client;
receiving a transportation instruction from the control device, wherein the transportation instruction is generated by the control device based on the current target transportation location; and
moving to the current target transportation location based on the transportation instruction.

18. The method of claim 17, further comprising: before sending the loading completion information to the control device,
receiving a loading instruction from the control device; and
in response to the loading instruction, moving from an original location to a storage location of the first article and finishing loading the first article at the storage location of the first article.

19. The method of claim 17, wherein the transportation instruction comprises a current target transportation path; and moving to the current target transportation location based on the transportation instruction comprises:
moving from a current location of the first transportation vehicle to the current target transportation location along the current target transportation path.

20. The method of claim 19, further comprising: after the first transportation vehicle arrives at the current target transportation location,
returning target transportation location arrival information to the control device, wherein the target transportation location arrival information indicates that the first transportation vehicle arrives at the current target transportation location.

21. The method of claim 19, further comprising: after returning the target transportation location arrival information to the control device,
in response to the first article being unloaded from the first transportation vehicle, sending article transportation success information to the control device.

22. The method of claim 19, further comprising: after returning the target transportation location arrival information to the control device,
receiving a new transportation instruction; and
moving from the current target transportation location to a new target transportation location based on the new transportation instruction.

23. The method of claim 21, further comprising: after the first transportation vehicle arrives at the current target transportation location,
sending article unloading prompt information to the first client, wherein the article unloading prompt information is used to prompt a user of the first client to unload the first article.

24. The method of claim 23, wherein the first article is locked in the first transportation vehicle; and the method further comprises: after sending the article unloading prompt information to the first client,
receiving unloading verification information from the first client, wherein the unloading verification information is a response of the first client to the article unloading prompt information; and
in response to the unloading verification information matching unloading verification information of the first article, unlocking the first article in the first transportation vehicle to enable the first article to be unloaded from the first transportation vehicle.

25. The method of claim 21, further comprising: after sending the article transportation success information to the control device,
receiving a return instruction returned by the control device in response to the article transportation success information; and
moving to an original location in response to the return instruction.

26. The method of claim 20, further comprising: after returning the target transportation location arrival information to the control device,
receiving an article unloading instruction returned by the control device in response to the target transportation location arrival information; and
in response to the article unloading return instruction, moving to a storage location of the first article, unloading the first article, and returning to an original location.

27. A control device, comprising:
a first receiving portion, configured to: when receiving loading completion information from a first transportation vehicle, obtain a current location of a first client in real time, wherein the loading completion information indicates that the first transportation vehicle finishes loading a first article required by the first client;
an obtaining portion, configured to: in response to the current location of the first client being not obtained for a first time, obtain a previous target transportation range corresponding to a previous target transportation location;
an adoption portion, configured to: in response to the current location of the first client being out of the previous target transportation range, take the current location of the first client as a current target transportation location; and
a first sending portion, configured to send a transportation instruction to the first transportation vehicle based on the current target transportation location, wherein the transportation instruction is used to instruct the first transportation vehicle to move from a current location of the first transportation vehicle to the current target transportation location.

28. A first transportation vehicle, comprising:
a second sending portion, configured to: when finishing loading a first article required by a first client, send loading completion information to a control device, wherein the loading completion information is used to instruct the control device to obtain a current location of the first client in real time and determine a current target transportation location of the first transportation vehicle based on the current location of the first client;
a second receiving portion, configured to receive a transportation instruction from the control device, wherein the transportation instruction is generated by the control device based on the current target transportation location; and
a movement portion, configured to move to the current target transportation location based on the transportation instruction.

29. A device for article transportation, comprising:
a first memory, configured to store executable instructions; and
a first processor, configured to execute the executable instructions stored in the first memory, to implement the method for article transportation of any one of claims 1 to 16.

30. A first transportation vehicle, comprising:
a second memory, configured to store executable instructions; and
a second processor, configured to execute the executable instructions stored in the second memory, to implement the method for article transportation of any one of claims 17 to 26.

31. A computer storage medium storing executable instructions, which, when executed by a first processor, implement the method for article transportation of any one of claims 1 to 16; or when executed by a second processor, implement the method for article transportation of any one of claims 17 to 26.
